Europäisches Patentamt

European Patent Office

Office européen des brevets

(11) Veröffentlichungsnummer: **0 321 788**
**A2**

# EUROPÄISCHE PATENTANMELDUNG

(21) Anmeldenummer: 88120496.0

(51) Int. Cl.⁴: **G02B 6/44**

(22) Anmeldetag: 08.12.88

(30) Priorität: **21.12.87 DE 3743334**

(43) Veröffentlichungstag der Anmeldung:
**28.06.89 Patentblatt 89/26**

(84) Benannte Vertragsstaaten:
**AT DE FR GB IT NL SE**

(71) Anmelder: **Standard Elektrik Lorenz Aktiengesellschaft**
**Lorenzstrasse 10**
**D-7000 Stuttgart 40(DE)**

(84) **DE**

Anmelder: **ALCATEL N.V.**
**Strawinskylaan 341 (World Trade Center)**
**NL-1077 XX Amsterdam(NL)**

(84) **FR GB IT NL SE AT**

(72) Erfinder: **Harbort, Hans**
**August-Lämmle-Strasse 26**
**D-7151 Affalterbach(DE)**
Erfinder: **Widler, Jörg, Dr.**
**Maybachstrasse 5**
**D-7302 Ostfildern(DE)**
Erfinder: **Grögl, Ferdinand**
**Albert-Einstein-Strasse 15/1**
**D-7141 Beilstein(DE)**

(74) Vertreter: **Graf, Georg Hugo, Dipl.-Ing. et al**
**Standard Elektrik Lorenz AG Patent- und**
**Lizenzwesen Postfach 30 09 29**
**D-7000 Stuttgart 30(DE)**

(54) **Optisches Kabel.**

(57) Es ist ein optisches Kabel mit mindestens einem Rohr (1) beschrieben, das mehrere Bündeladern (2) enthält. Jede Bündelader (2) weist eine Hülle (4) auf, die mehrere optische Fasern (3) umgibt. Die Hülle (4) besteht aus einem weichen Kunststoff, der leicht mit bloßen Fingern entfernt werden kann.

## Optisches Kabel

Die Erfindung bezieht sich auf ein optisches Kabel, das Bündeladern enthält. Jede Bündelader besteht aus mehreren optischen Fasern und einer diese lose umgebenden Hülle, wobei jede Faser eine andere Information übertragen kann.

Bei Bündeladern, die die Spezifikationen der deutschen Bundespost erfüllen, besteht die Hülle aus einem harten Kunststoff. Zum Entfernen der Hülle, wie es beispielsweise als Vorbereitung zum Spleißen nötig ist, sind daher Hilfsmittel (Messer, Schere etc.) erforderlich.

Von der Firma AT&T, USA, werden Kabel hergestellt, die ein Rohr aufweisen, das bis zu 48 optische Fasern enthält (AT&T Marketing Communications 2122 B, August 1985). Jeweils 4 bis 12 optische Fasern sind mit einer farbigen Wendel umwickelt, die die Fasern zusammenhält. Das Rohr ist mit einer Füllmasse gefüllt. Auf das Rohr ist direkt ein zugfester Kabelmantel aufgebracht.

Diese Art der Zusammenfassung der einzelnen optischen Fasern zu Bündeln ermöglicht hohe Faserpackungsdichten, erfordert aber beim Spleißen besondere Aufmerksamkeit, um nicht die Fasern der verschiedenen Bündel durcheinanderzubringen. Bei den oben beschriebenen Kabeln ist eine Zuordnung einer einzelnen optischen Faser zu einem bestimmten Bündel an einem Kabelende kaum möglich, da beim Entfernen des Rohres die Wendeln aufgehen und alle optischen Fasern durcheinandergeraten.

Der Erfindung liegt die Aufgabe zugrunde, ein optisches Kabel anzugeben, bei dem in einfacher Weise Vielfachspleißungen durchgeführt werden können.

Die Lösung dieser Aufgabe erfolgt mit dem im Hauptanspruch genannten Mittel. Vorteilhafte Weiterbildungen sind in den Unteransprüchen enthalten.

Die Erfindung hat den Vorteil, daß beim Spleißen nach dem Entfernen des Rohres die Hüllen der einzelnen Bündeladern nacheinander entfernt werden können, so daß die optischen Fasern der einen Bündelader nicht mit denen einer anderen Bündelader durcheinandergeraten können. Ein weiterer Vorteil ergibt sich durch die Auswahl von weichen Kunststoffen für die Hülle, so daß diese leicht im erforderlichen Umfang mit den bloßen Fingern entfernt werden kann.

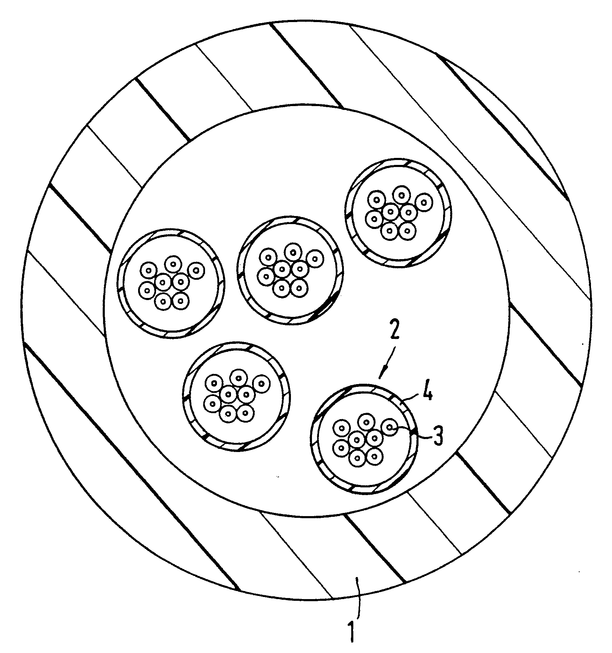

Die Erfindung wird nachstehend anhand eines Ausführungsbeispiels erläutert. Die einzige Figur zeigt einen Querschnitt durch ein Rohr mit fünf Bündeladern. Weitere Ausführungen sind in der Beschreibung enthalten.

Das neue optische Kabel, dessen Kabelmantel in der Figur nicht dargestellt ist, weist zumindest ein Rohr 1 auf, dessen Durchmesser etwa 5 mm beträgt. Im Inneren des Rohres 1 befinden sich in loser Anordnung fünf Bündeladern 2. Jede Bündelader 2 besteht aus mehreren optischen Fasern 3 und einer Hülle 4. Diese besteht aus einem weichen Kunststoff, der leicht mit bloßen Fingern entfernt werden kann. Geeignete Kunststoffe sind bei Raumtemperatur vernetzbare oder weiche thermoplastische Elastomere, beispielsweise Polyesteramidcopolymere, weiche Äthylen-Propylen-Copolymere oder ein Styrolbutadienkautschuk. Das Rohr besteht aus einem harten, kaum schrumpfenden Kunststoff, beispielsweise aus einem amorphen Polyamid, einem Polyester oder einer Polycarbonatmischung.

Die Hüllen verschiedener Bündeladern können unterschiedlich eingefärbt sein. Ebenso können die optischen Fasern jeder Bündelader unterschiedlich eingefärbt sein. Die Bündeladern und/oder das Rohr können mit einer Füllmasse gefüllt sein.

Bei anderen Ausführungen weist jede Bündelader einen Reißfaden auf, der das Entfernen der Hülle auf großer Länge erleichtert. Der Reißfaden besteht aus einer Glas- oder Aramidfaser und ist besonders auffällig markiert. Er ist an beliebiger Stelle zwischen den einzelnen optischen Fasern oder in der Hülle angeordnet.

Die oben beschriebenen, Bündeladern enthaltenden Rohre sind bei hoher Packungsdichte der optischen Fasern in optischen Kabeln praktisch beliebigen Aufbaus verwendbar. Beispielsweise kann direkt auf ein Rohr ein zugfester Kabelmantel aufgebracht sein. Mehrere Rohre können auch um ein zugfestes Zentralelement angeordnet und gemeinsam von einem Kabelmantel umgeben sein, der dann nicht zugfest zu sein braucht.

## Ansprüche

1. Optisches Kabel mit mindestens einem Rohr (1), in dem sich lose mehrere Bündeladern (2) befinden, deren Hüllen (4) aus einem weichen Kunststoff bestehen und ohne Hilfsmittel leicht entfernbar sind.

2. Optisches Kabel nach Anspruch 1, dadurch gekennzeichnet, daß die Hüllen (4) aus einem weichen thermoplastischen Material bestehen.

3. Optisches Kabel nach Anspruch 2, dadurch gekennzeichnet, daß die Hüllen (4) aus einem Polyesteramidcopolymer, einem weichen Äthylen-Propylen-Copolymer oder einem Styrolbutadienkautschuk besteht.

4. Optisches Kabel nach Anspruch 1, dadurch gekennzeichnet, daß die Hüllen (4) aus einem vernetzbaren Elastomer bestehen.

5. Optisches Kabel nach einem der vorhergehenden Ansprüche, dadurch gekennzeichnet, daß sich innerhalb der Hülle oder in der Hülle ein Reißfaden befindet.

6. Optisches Kabel nach Anspruch 5, dadurch gekennzeichnet, daß der Reißfaden aus einer Glas- oder Aramidfaser besteht.

7. Optisches Kabel nach einem der vorhergehenden Ansprüche, dadurch gekennzeichnet, daß das Rohr (1) aus einem harten Kunststoff besteht.

8. Optisches Kabel nach Anspruch 7, dadurch gekennzeichnet, daß das Rohr (1) aus amorphem Polyamid, Polyester oder einer Polycarbonatmischung besteht.

9. Optisches Kabel nach einem der vorhergehenden Ansprüche, dadurch gekennzeichnet, daß das Rohr (1) und oder die Bündeladern (2) mit einer weichen pastösen Masse gefüllt sind.

10. Optisches Kabel nach einem der vorhergehenden Ansprüche, dadurch gekennzeichnet, daß mehrere Rohre konzentrisch um ein Zentralelement angeordnet sind.

H. Harbort 6-7-20